# EUROPEAN PATENT APPLICATION

(11) **EP 4 567 621 A1**
(43) Date of publication of application: **11.06.2025**
(21) Application number: 23856282.1
(22) Date of filing: 29.06.2023
(51) Int. Cl.: G06F 16/21

(54) **DATA PROCESSING METHOD AND APPARATUS**

(30) Priority: 26.08.2022 CN 202211037931
(71) Applicant: Huawei Technologies Co., Ltd., Shenzhen, Guangdong 518129 (CN)
(72) Inventor: PENG, Fengbin, Shenzhen, Guangdong 518129 (CN); ZHOU, Minqi, Shenzhen, Guangdong 518129 (CN); LUO, Zhenghai, Shenzhen, Guangdong 518129 (CN); HU, Jing, Shenzhen, Guangdong 518129 (CN); CHEN, Jianhui, Shenzhen, Guangdong 518129 (CN)
(74) Representative: Maiwald GmbH
(86) International application number: PCT/CN2023/104061
(87) International publication number: WO 2024/041191

(57) **Abstract**

Embodiments of this application provide a data processing method and apparatus. In the method, a plurality of database operations of a transaction are grouped, and a plurality of database operations in groups are concurrently executed, to improve an overall throughput and processing efficiency of a system. In addition, in this application, conflict detection is performed in advance, to group database operations that may conflict with each other into different groups, thereby reducing a conflict probability during concurrent execution, and further improving the processing efficiency of the system.

## Description

This application claims priority to Chinese Patent Application No. 202211037931.X, filed with the China National Intellectual Property Administration on August 26, 2022 and entitled "DATA PROCESSING METHOD AND APPARATUS", which is incorporated herein by reference in its entirety.

### TECHNICAL FIELD

Embodiments of this application relate to the data processing field, and in particular, to a data processing method and apparatus.

### BACKGROUND

Performance of a database is a key indicator of competitiveness of a database product. In "data-centric" data center strategic transformation, the database stores status data of a data center, and the performance of the database directly affects performance of a data center device. In products such as data communication and industrial data services, due to resource and power consumption limitations, current software optimization based on a Von Neumann processor architecture cannot meet increasing performance requirements of data services in a resource-limited environment. To overcome this bottleneck, various hardware acceleration and heterogeneous computing methods are proposed in the industry. However, in the database, due to isolation and atomicity of a transaction (Transaction) model, data operations are required to be blocked or undergo a conflict detection in each phase or data set, which limits a concurrency capability of hardware. As a result, a high-throughput performance indicator cannot be implemented during database processing.

### SUMMARY

Embodiments of this application provide a data processing method and apparatus. In the method, the apparatus performs conflict filtering in advance, and executes database operations in a concurrent mode, to reduce a probability of a failure of a transaction and improve a throughput performance indicator of a system.

According to a first aspect, an embodiment of this application provides a data processing method. The method includes: An apparatus obtains a transaction, where the transaction includes N database operations, and N is a positive integer greater than 1. Then, the apparatus performs conflict detection on the N database operations to obtain a conflict detection result, where the conflict detection result includes a result indicating that a first database operation and a second database operation are conflicting operations of each other, and the first database operation and the second database operation belong to the N database operations. Then, the apparatus groups the N database operations into M groups based on the conflict detection result, where each of the M groups includes a plurality of database operations, the first database operation and the second database operation belong to different groups, and M is a positive integer greater than 1. The apparatus concurrently executes the plurality of database operations in each of the M groups. In this way, the apparatus (which may also be understood as a database) in this embodiment of this application can construct non-conflicting batch operations by performing conflict filtering in advance, to reduce a probability of a failure of the transaction, and facilitate concurrency of accelerators.

In a possible implementation, that the apparatus concurrently executes the plurality of database operations in each of the M groups includes: The apparatus invokes a plurality of hardware accelerators to concurrently execute a plurality of database operations in a single group of the M groups, where a single hardware accelerator executes a single database operation. In this way, in this embodiment of this application, the plurality of pieces of hardware are used for parallel execution, to improve processing efficiency of the database, increase a throughput, reduce CPU usage, and implement collaborative work of software and hardware.

In a possible implementation, that the apparatus invokes a plurality of hardware accelerators to concurrently execute a plurality of database operations in a single group of the M groups includes: The apparatus triggers X hardware accelerators based on X database operations included in a first group, where the first group belongs to the M groups. The apparatus indicates the X database operations to the X hardware accelerators, so that the X hardware accelerators execute the X database operations in parallel. In this way, execution of the plurality of accelerators can be in parallel, and the software can invoke the hardware accelerator, to implement software and hardware collaboration.

In a possible implementation, that the apparatus indicates the X database operations to the X hardware accelerators includes: The apparatus indicates index information corresponding to each of the X database operations to the X hardware accelerators, so that the X hardware accelerators execute the X database operations based on the index information corresponding to each of the X database operations. In this way, the plurality of accelerators can execute parallel operations based on the index information, to execute the database operations on data indicated by the index information.

In a possible implementation, that the apparatus invokes a plurality of hardware accelerators to concurrently execute a plurality of database operations in a single group of the M groups includes: reading execution results of the X database operations from a shared memory, where the execution results of the X database operations are written after the plurality of hardware accelerators concurrently execute the X database operations. In this way, the CPU and the hardware accelerator can transmit data by using the shared memory. The CPU can read the corresponding execution result.

In a possible implementation, that the apparatus invokes a plurality of hardware accelerators to concurrently execute a plurality of database operations in a single group of the M groups includes: after the execution results of the X database operations are read from the shared memory, triggering Y hardware accelerators based on Y database operations included in a second group, where the second group belongs to the M groups; and indicating the Y database operations to the Y hardware accelerators, so that the Y hardware accelerators execute the Y database operations in parallel. In this way, in this embodiment of this application, a plurality of groups are cyclically executed, and each group is executed in parallel, so that processing efficiency of a system can be effectively improved, and a throughput of the system can be improved.

In a possible implementation, the execution results of the X database operations are placed in a ring queue of the shared memory. In this way, in this embodiment of this application, both the hardware and the CPU can read information in the ring queue through the ring queue. In addition, the information in the ring queue is connected end to end, and can be reused.

In a possible implementation, that the apparatus invokes a plurality of hardware accelerators to concurrently execute a plurality of database operations in a single group of the M groups includes: sending a first indication signal to a memory processor through a first interface, where the indication signal indicates the memory processor to trigger the X hardware accelerators. In this way, in this embodiment of this application, the preset interface can facilitate quick triggering and deployment of the hardware accelerator.

In a possible implementation, before the apparatus concurrently executes the plurality of database operations in each of the M groups, the method includes: placing index information of a delete operation in the N database operations in a first queue; and placing index information of a reverse operation of an insert operation in the N database operations in a second queue. In this way, in this embodiment of this application, delete does not need to be marked, and the delete operation can be maintained only through the queue, thereby reducing query time of a delete marker, and further improving the processing efficiency. The reverse operation of the insert operation is maintained through the queue, so that when the transaction is rolled back, rollback of the transaction can be completed based on the reverse operation.

In a possible implementation, that the apparatus concurrently executes the plurality of database operations in each of the M groups includes: before the transaction is committed, executing delete operations in the first queue in parallel based on the M groups. In this way, in this embodiment of this application, delete does not need to be marked, and the delete operation can be maintained only through the queue, thereby reducing the query time of the delete marker, and further improving the processing efficiency.

In a possible implementation, the method further includes: if an operation conflict is detected in a process of concurrently executing the plurality of database operations in each of the M groups, executing the reverse operation of the insert operation based on the index information of the reverse operation of the insert operation in the second queue, to complete rollback of the transaction. In this way, in this embodiment of this application, version information of the transaction is decoupled, so that transaction information is separated, and parallel execution of the hardware is better implemented.

In a possible implementation, the method further includes: after the transaction is rolled back, executing the N database operations in series. In this way, in this embodiment of this application, an optimistic transaction mode and a pessimistic transaction mode are combined, so that when a conflict occurs, the serial mode can be switched to continue execution, to improve the processing efficiency of the system.

In a possible implementation, that the apparatus performs conflict detection on the N database operations to obtain a conflict detection result includes: obtaining a hash code corresponding to each of the N database operations; detecting whether hash codes corresponding to the N data operations have equal values; and when it is detected that a hash code of the first database operation is equal to a hash code of the second database operation, determining that the first database operation and the second database operation are the conflicting operations of each other. In this way, the database operations that may conflict with each other can be preliminarily filtered out by determining the hash code, so that in a parallel execution process, the conflicting operations are not executed together.

In a possible implementation, that the apparatus groups the N database operations into M groups based on the conflict detection result includes: grouping the N database operations into the M groups based on the conflict detection result and according to a preset grouping rule, where the preset grouping rule includes at least one of the following: hash codes of a plurality of database operations in a single group are not equal; a quantity of database operations included in a single group is less than or equal to a quantity of hardware accelerators; execution time of database operations included in a single group is within a specified range; and types of database operations included in a single group are the same. In this way, the operations that may conflict with each other can be predetermined based on the hash code, so that the conflicting operations are grouped into different groups. The quantity of database operations executed in parallel depends on the quantity of accelerators, so that the quantity of hardware is sufficient to support the quantity of database operations executed in parallel, to implement the software and hardware collaboration.

According to a second aspect, an embodiment of this application provides a data processing apparatus. The apparatus includes: an obtaining module, configured to obtain a transaction, where the transaction includes N database operations, and N is a positive integer greater than 1; a conflict detection module, configured to perform conflict detection on the N database operations to obtain a conflict detection result, where the conflict detection result indicates that a first database operation and a second database operation are conflicting operations of each other, and the first database operation and the second database operation belong to the N database operations; a grouping module, configured to group the N database operations into M groups based on the conflict detection result, where each of the M groups includes a plurality of database operations, the first database operation and the second database operation belong to different groups, and M is a positive integer greater than 1; and an execution module, configured to concurrently execute the plurality of database operations in each of the M groups.

In a possible implementation, the execution module is specifically configured to invoke a plurality of hardware accelerators to concurrently execute a plurality of database operations in a single group of the M groups, where a single hardware accelerator executes a single database operation.

In a possible implementation, the execution module is specifically configured to: trigger X hardware accelerators based on X database operations included in a first group, where the first group belongs to the M groups; and indicate the X database operations to the X hardware accelerators, so that the X hardware accelerators execute the X database operations in parallel.

In a possible implementation, the execution module is specifically configured to read execution results of the X database operations from a shared memory, where the execution results of the X database operations are written after the plurality of hardware accelerators concurrently execute the X database operations.

In a possible implementation, the execution module is specifically configured to: after the execution results of the X database operations are read from the shared memory, trigger Y hardware accelerators based on Y database operations included in a second group, where the second group belongs to the M groups; and indicate the Y database operations to the Y hardware accelerators, so that the Y hardware accelerators execute the Y database operations in parallel.

In a possible implementation, the execution results of the X database operations are placed in a ring queue of the shared memory.

In a possible implementation, the execution module is specifically configured to send a first indication signal to a memory processor through a first interface, where the indication signal indicates the memory processor to trigger the X hardware accelerators.

In a possible implementation, the execution module is further configured to: place index information of a delete operation in the N database operations in a first queue; and place index information of a reverse operation of an insert operation in the N database operations in a second queue.

In a possible implementation, the execution module is further configured to: before the transaction is committed, execute delete operations in the first queue in parallel based on the M groups.

In a possible implementation, the execution module is further configured to: if an operation conflict is detected in a process of concurrently executing the plurality of database operations in each of the M groups, execute the reverse operation of the insert operation based on the index information of the reverse operation of the insert operation in the second queue, to complete rollback of the transaction.

In a possible implementation, the execution module is further configured to: after the transaction is rolled back, execute the N database operations in series.

In a possible implementation, the conflict detection module is specifically configured to: obtain a hash code corresponding to each of the N database operations; detect whether hash codes corresponding to the N data operations have equal values; and when it is detected that a hash code of the first database operation is equal to a hash code of the second database operation, determine that the first database operation and the second database operation are the conflicting operations of each other.

In a possible implementation, the grouping module is specifically configured to: group the N database operations into the M groups based on the conflict detection result and according to a preset grouping rule, where the preset grouping rule includes at least one of the following: hash codes of a plurality of database operations in a single group are not equal; a quantity of database operations included in a single group is less than or equal to a quantity of hardware accelerators; execution time of database operations included in a single group is within a specified range; and types of database operations included in a single group are the same.

According to a third aspect, an embodiment of this application provides an electronic device. The electronic device includes one or more processors, a storage, and one or more computer programs. The one or more computer programs are stored in the storage, and when the computer program is executed by the one or more processors, the electronic device is enabled to perform instructions of the method according to the first aspect or any possible implementation of the first aspect.

According to a fourth aspect, an embodiment of this application provides a computer-readable medium, configured to store a computer program. The computer program includes instructions used to perform the method according to the first aspect or any possible implementation of the first aspect.

According to a fifth aspect, an embodiment of this application provides a computer program. The computer program includes instructions used to perform the method according to the first aspect or any possible implementation of the first aspect.

According to a sixth aspect, an embodiment of this application provides a chip, including one or more interface circuits and one or more processors. The interface circuit is configured to: receive a signal from a storage of an electronic device, and send the signal to the processor, the signal includes computer instructions stored in the storage, and when the processor executes the computer instructions, the electronic device is enabled to perform instructions of the method according to the first aspect or any possible implementation of the first aspect.

### BRIEF DESCRIPTION OF DRAWINGS

FIG. 1 is a diagram of an example of a structure of a database;
FIG. 2 is a diagram of a structure of a database according to an embodiment of this application;
FIG. 3 is a diagram of an example of conflict detection;
FIG. 4 is a diagram of an example of grouping;
FIG. 5 is an example of a procedure of creating a database table;
FIG. 6 is a schematic flowchart of an example of data processing;
FIG. 7 is a diagram of an example of queues;
FIG. 8 is a diagram of an example of invoking a hardware accelerator;
FIG. 9 is a schematic flowchart of an example of reading data;
FIG. 10 is a diagram of an example of a structure of a data processing apparatus; and
FIG. 11 is a diagram of an example of a structure of an apparatus.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

A term "and/or" in this specification describes only an association relationship between associated objects and indicates that three relationships may exist. For example, A and/or B may indicate the following three cases: Only A exists, both A and B exist, and only B exists.

In the specification and the claims in embodiments of this application, terms "first", "second", and the like are intended to distinguish between different objects, but do not indicate a specific order of the objects. For example, a first target object, a second target object, and the like are intended to distinguish between different target objects, but do not indicate a specific order of the target objects.

In embodiments of this application, words such as "example" or "for example" are used to indicate giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a relative concept in a specific manner.

In descriptions of embodiment of this application, unless otherwise stated, "a plurality of" means two or more. For example, a plurality of processing units mean two or more processing units, and a plurality of systems mean two or more systems.

Before the solutions in embodiments of this application are described, some technical terms in this application are briefly described first.

Optimistic transaction mode: The optimistic transaction mode may also be referred to as an optimistic concurrency control mode, an optimistic transaction processing mode, or the like. This is not limited in this application. In the optimistic transaction mode, for operations that may conflict with each other during concurrent execution, it is assumed that the operations do not really conflict with each other, and are allowed to be concurrently executed. A conflict is resolved only when the conflict really occurs, for example, a transaction is rolled back. It may be understood as that the transaction is executed in an optimistic form, to be specific, concurrent execution is first performed, and the transaction is rolled back after the conflict occurs.

Pessimistic transaction mode: A mode corresponding to the optimistic transaction mode is the pessimistic transaction mode. The pessimistic transaction mode may also be referred to as a pessimistic transaction processing mode, a pessimistic concurrency control mode, or the like. This is not limited in this application. In this mode, for the operations that may conflict with each other during the concurrent execution, it is assumed that the operations definitely conflict with each other, and the operations executed in parallel are executed in series by enabling the transaction to wait (be locked) or be aborted (timestamp ordering). In other words, locking is performed for transaction execution to protect an accessed resource, to implement mutual exclusion between read/write and write/write, and ensure that a transaction procedure can be completed as much as possible after the transaction is locked.

Transaction: The transaction may also be referred to as a database transaction, and is an operation set of a single logical working unit. For example, one transaction may include a plurality of database operations.

Database operation: The database operation includes but is not limited to a data definition language (data definition language, DDL) operation and a data manipulation language (data manipulation language, DML) operation. The DDL operation is used to change a structure of a database, for example, may be used to define or change a structure of a table (TABLE). The DML command is used to manage data in the database, and includes operations such as INSERT (insert), DELETE (delete), UPDATE (update), and SELECT (select).

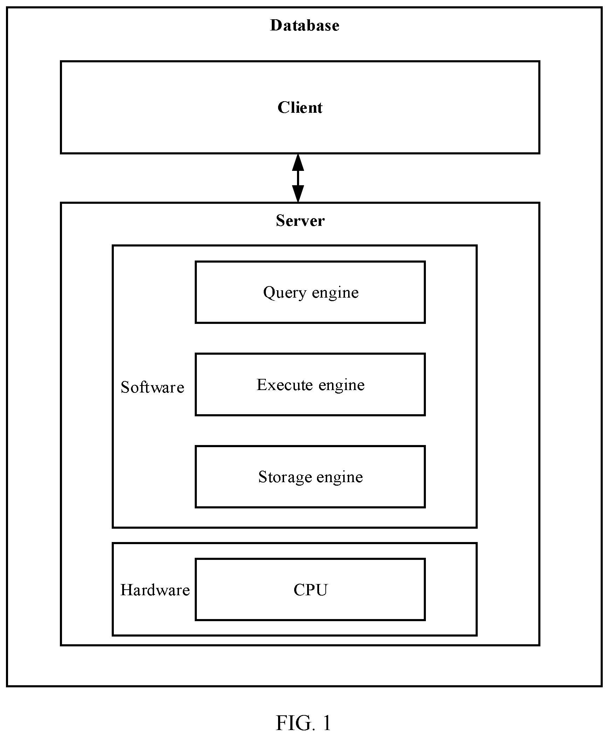

FIG. 1 is a diagram of an example of a structure of a database. Refer to FIG. 1. The database includes a client and a server. The client includes but is not limited to a high-performance application and the like. The client may provide an operation interface of the database for a user. The user may enter a database command, for example, a structured query language (Structured Query Language, SQL) statement, in the operation interface provided by the client, to trigger the database to execute a corresponding transaction, in other words, indicate the database to execute a corresponding database operation. As described above, one transaction may correspond to one database set, and the database set may include a plurality of database operations.

Still refer to FIG. 1. For example, the server includes a software side and a hardware side. The software side includes but is not limited to a query engine (Query Engine), an execute engine (Execute Engine), and a storage engine (Storage Engine). The hardware side includes but is not limited to a component (or a device, a module, or the like) like a CPU or a memory (not shown in the figure).

In the conventional technology, the database usually uses the optimistic transaction mode. For example, the CPU may be a multi-core CPU. The CPU may execute the plurality of database operations by using the plurality of cores. As described above, the optimistic transaction mode is to perform rollback after a conflict occurs. Due to disorder of the database operations in the transaction, an operation conflict may occur frequently. As a result, the rollback of the transaction frequently occurs in the optimistic transaction mode, which affects processing efficiency of the database.

Embodiments of this application provide a data processing method. A concurrency capability between transactions can be effectively improved by using an execution model of software and hardware collaboration. In addition, a conflict is filtered out in advance, so that a conflict problem in an optimistic transaction mode can be effectively reduced. In addition, switching between the optimistic mode and a pessimistic mode can be implemented by combining the optimistic mode and the pessimistic mode, so that a transaction can continue to be executed after a conflict occurs, to meet an order-preserving requirement of serialization without manual intervention. In this application, a performance indicator of a throughput up to Xmrwops can be provided when memory resources are limited and few CPU resources and power consumption are consumed, to meet requirements of a database product for a low memory capacity and a high throughput.

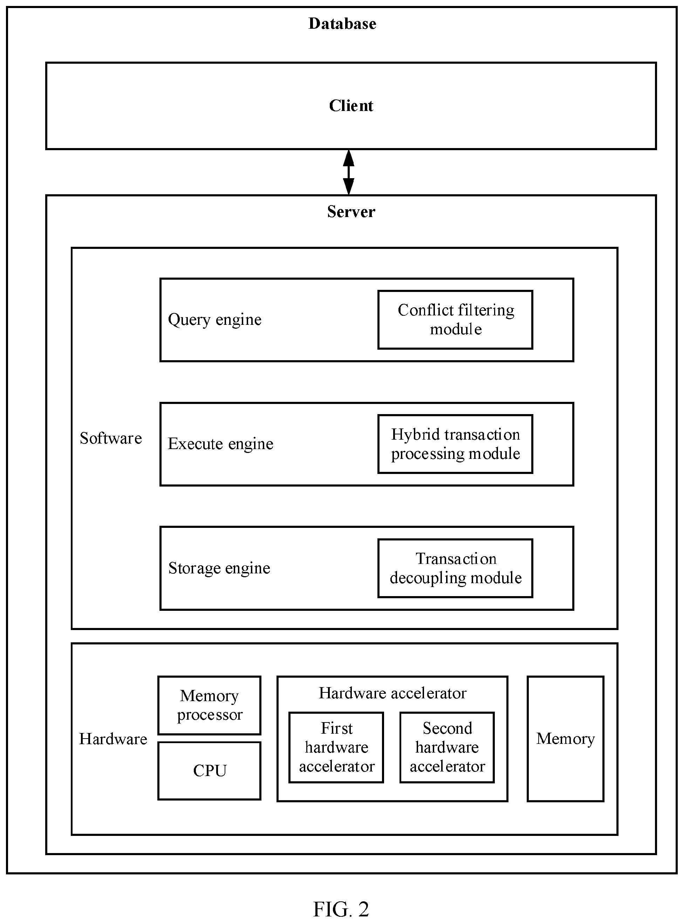

FIG. 2 is a diagram of a structure of a database according to an embodiment of this application. Refer to FIG. 2. The database includes a client and a server. For descriptions of the client, refer to the related content in FIG. 1. Details are not described herein again. For example, the server includes a software side and a hardware side. The software side includes but is not limited to a query engine, an execute engine, and a storage engine. The hardware side includes but is not limited to a memory processor (memory processor, MP), a central processing unit (central processing unit, CPU), a hardware accelerator, a memory, and the like. It should be noted that the memory processor, the CPU, and the hardware accelerator may be on a same chip, or may be independent components and connected through a bus. This is not limited in this application. It should be further noted that the hardware accelerator and the memory processor may be logic circuits. Optionally, the software side may include a driver (not shown in the figure) corresponding to the hardware reducer, for example, a hardware acceleration driver. The hardware acceleration driver on the software side may be understood as a logic program of the hardware accelerator. In other words, steps performed by the hardware accelerator in embodiments of this application may be performed by running the logic program by the hardware accelerator.

For example, the query engine, the execute engine, the storage engine, and the like on the software side are run on the CPU, in other words, the CPU supports the engines in performing corresponding steps.

In this embodiment of this application, the query engine includes but is not limited to a conflict filtering module (which may also be referred to as a conflict filter). The conflict filtering module may be configured to perform conflict detection on received database operations (which may also be understood as database commands, for example, DML commands). For example, the query engine may further include another module, for example, a parsing module configured to parse speech of the database. This is not limited in this application.

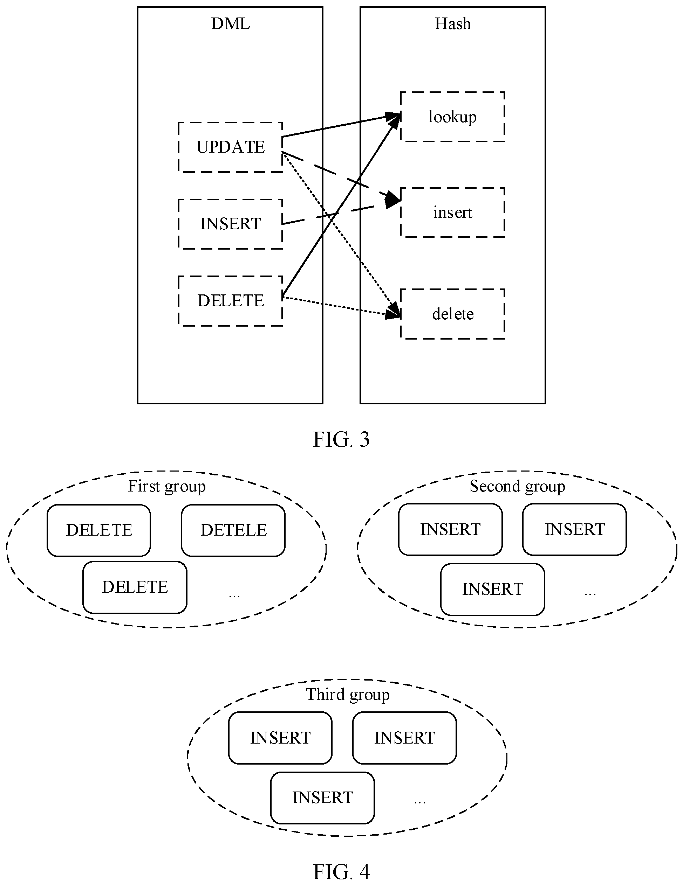

In this embodiment of this application, FIG. 3 is a diagram of an example of conflict detection. Refer to FIG. 3. Specifically, the conflict detection module may obtain an operation interface of a corresponding hash index based on each primary key database operation (namely, the DML operation, including but not limited to UPDATE, INSERT, DELETE, and the like), and further obtain a hash code (Hash Code) corresponding to each operation. For example, as shown in FIG. 3, the UPDATE operation may be mapped to a lookup (lookup) operation, an insert operation, and a delete operation. It should be noted that, to distinguish from the DML operation, in this embodiment of this application, the DML operation is indicated by uppercase letters, and the mapped operation interface of the hash index is indicated by lowercase letters. Optionally, the INSERT operation may be mapped to an insert operation. The DELETE operation may be mapped to a lookup (lookup) operation and a delete operation. Then, the conflict detection module obtains the hash code of the operation interface of each hash index. For a manner of obtaining the hash code, refer to the conventional technology. This is not limited in this application.

For example, the conflict detection module may detect whether conflicting values exist in the obtained hash codes, to obtain a conflict detection result. Optionally, the conflicting values are hash codes of a same value, and correspondingly, DML operations corresponding to the hash codes are conflicting operations. For example, after obtaining all hash codes, the conflict detection module may compare a hash code with other hash codes one by one, to detect whether a hash code same as the to-be-compared hash code exists. In an example, if there are hash codes (which may be two or more hash codes) with a same value, the conflict detection module determines that DML operations corresponding to the hash codes with the same value conflict with each other. For example, an UPDATE operation 1 is mapped to a lookup operation 1, an insert operation 1, and a delete operation 1. A DELETE operation 1 is mapped to a lookup operation 2 and a delete operation 2. A hash code corresponding to each operation obtained by the conflict detection module is as follows: a hash code of the lookup operation 1 is a hash code A, a hash code of the insert operation 1 is a hash code B, a hash code of the delete operation 1 is a hash code C, a hash code of the lookup operation 2 is a hash code D, and a hash code of the delete operation 2 is a hash code E. The conflict detection module compares the hash code A with the hash codes B to E (or the hash code D and the hash code E) one by one, to determine whether a hash code that is the same as the hash code A exists. If the hash code A is different from other hash codes, the hash code B continues to be compared with the other hash codes. The process is repeated until all the hash codes are compared. For example, it is assumed that the hash code C is the same as the hash code E, the conflict detection module may determine that the DML operation (namely, the UPDATE operation 1) corresponding to the hash code C and the DML operation (namely, the DELETE operation 1) corresponding to the hash code E are conflicting operations.

In embodiments of this application, the query engine is further configured to maintain a transaction mode status machine, and may be configured to manage a concurrency processing mode of the database. As described above, the concurrency control modes of the database include but are not limited to the optimistic transaction mode and the pessimistic transaction mode. The query engine may switch a status (including an optimistic transaction mode state and a pessimistic transaction mode state) of the transaction mode status machine based on a detection mechanism of the conflict filtering module, to switch the concurrency mode of the database. In embodiments of this application, in an initial state, the query engine sets the transaction mode status machine to the optimistic transaction mode by default. In other words, the database concurrently executes the database operations in the optimistic transaction mode by default. When the database (specifically, the hardware accelerator) executes a specific operation, if an operation conflict occurs, underlying hardware (namely, the hardware accelerator, or may be reported by other hardware, which this is not limited in this application) reports an error to the query engine, to indicate that the conflict occurs. The query engine may switch the transaction mode status machine to the pessimistic transaction mode based on the error reported by the underlying hardware. In this case, the modules in the database process the transactions in series based on the pessimistic transaction mode, to implement switching between the optimistic mode and the pessimistic mode, so as to supplement the optimistic transaction mode and meet a serial execution requirement.

Still refer to FIG. 2. For example, the execute engine includes but is not limited to a hybrid transaction processing module. The hybrid transaction processing module is configured to schedule the storage engine based on the transaction mode indicated by the transaction mode status machine of the query module. In an example, if the transaction mode status machine maintained by the query module is set to the optimistic transaction mode, the execute engine may group the database operations (for example, the DML operations) based on the conflict detection result of the query engine, and invoke the storage engine to execute corresponding database operations in parallel based on a grouping result. In another example, if the transaction mode status machine maintained by the query module is set to the pessimistic transaction mode, the execute engine rolls back the transaction, and invokes, in the pessimistic transaction mode, the storage engine to execute corresponding database operations in series.

In embodiments of this application, the hybrid transaction processing module sets a grouping rule in advance. Optionally, the grouping rule includes a grouping rule 1, and the grouping rule 1 includes but is not limited to: Any two database operations in a same group do not conflict with each other. In embodiments of this application, the grouping rule may further include a grouping rule 2, and the grouping rule 2 includes but is not limited to: grouping database operations of a same type into one group. For example, operations in a same group may all be "insert operations", or operations in a same group may all be "delete operations". Optionally, the grouping rule may further include a grouping rule 3, and the grouping rule 3 includes but is not limited to: grouping operations with approximate execution costs into one group. For example, the "execution cost" is optionally resources consumed by the database to execute a data operation. The resource may include but is not limited to time and the like. This is not limited in this application. For example, database operations with short execution time (for example, less than a preset threshold, which may be set based on an actual requirement, and is not limited in this application) are grouped into a same group, and database operations with long execution time (for example, greater than or equal to the preset threshold) are grouped into a same group.

It should be noted that the grouping rule in embodiments of this application may include the grouping rule 1, or may be a combination of the grouping rule 1 and another grouping rule (for example, the grouping rule 2 and/or the grouping rule 3, or may be another grouping rule, which may be set based on an actual requirement, and is not limited in this application).

In this embodiment of this application, a quantity of data operations included in a single group depends on a quantity of execution units. In this embodiment of this application, the execution unit is optionally a component that can be configured to process the database operation when the storage engine is in the optimistic transaction mode state. In this embodiment of this application, when the storage engine is in the optimistic transaction mode state, the execution unit is the hardware accelerator. Correspondingly, the quantity of database operations included in the single group may be less than or equal to a quantity of hardware accelerators (which may also be understood as a quantity of hardware acceleration units in the hardware accelerator). For example, if the quantity of hardware accelerators in the database is 32, correspondingly, the conflict filtering module may group received N operations into a plurality of (for example, M) groups according to the grouping rule. A quantity of database operations included in each of the M groups is less than or equal to 32.

FIG. 4 is a diagram of an example of grouping. Refer to FIG. 4. The hybrid transaction processing module performs grouping based on the conflict detection result and according to the grouping rule (the grouping rule includes the grouping rule 1, the grouping rule 2, and the grouping rule 3), to obtain a first group, a second group, and a third group. The first group includes 10 DELETE operations (a quantity in the figure is merely an example), the second group includes 20 INSERT operations, and the third group includes 32 INSERT operations. The database operations in the first group, the second group, and the third group all belong to a same transaction. In other words, the plurality of database operations belong to an operation set corresponding to the transaction.

Still refer to FIG. 4. For example, hash codes corresponding to the operations in the first group are different from each other, hash codes corresponding to the operations in the second group are different from each other, and hash codes corresponding to the operations in the third group are different from each other, that is, the requirement of the grouping rule 1 is met. For example, all the database operations in the first group are the DELETE operations, and all the operations in the second group and the third group are the INSERT operations, that is, the requirement of the grouping rule 2 is met. For example, execution costs of the operations in the second group are all greater than the preset threshold, and execution costs of the operations in the third group are all less than or equal to the preset threshold, that is, the requirement of the grouping rule 3 is met. For example, the quantity of database operations included in each of the first group, the second group, and the third group is less than or equal to 32, where 32 is the quantity (namely, 32) of hardware acceleration units included in the hardware accelerator in an electronic device (namely, a device in which the database is located). It should be noted that, in the grouping result in this embodiment of this application, the type and the quantity of database operations included in each group are merely examples. This is not limited in this application.

It should be noted that, in this embodiment of this application, as shown in FIG. 3, the UPDATE operation corresponds to the lookup operation, the insert operation, and the delete operation. In other words, to complete an UPDATE operation, data needs to be first looked up, data is inserted, and then original data is deleted. For a specific operation, refer to the conventional technology. Details are not described in this application. Correspondingly, in the grouping process, the execute engine may divide the UPDATE operation into the DELETE operation and the INSERT operation, and then group the DELETE operation and the INSERT operation that correspond to the UPDATE operation. In other words, if the group includes the DELETE operation, the operation may be a database operation indicated by an original statement (namely, a database statement corresponding to a delete operation entered by the user), or may be an operation corresponding to the UPDATE operation. This is not limited in this application.

In embodiments of this application, the execute engine may determine an execution task (which may also be referred to as an execution plan, an execution policy, or the like, and is not limited in this application) based on the grouping result, and invoke the storage engine to execute the execution task based on the execution task. For example, the execution task includes but is not limited to a parallel task or a serial task. The parallel task is a task determined in the optimistic transaction mode. The task includes but is not limited to index information corresponding to each database operation in the transaction. For example, for the second group in FIG. 4, new data needs to be inserted. Correspondingly, the execute engine (which may be specifically the hybrid transaction processing module) may generate corresponding index information based on each database operation, where the index information indicates a space address into which newly inserted data is written. For a specific manner of generating the index information, refer to an embodiment in the conventional technology. This is not limited in this application. For another example, for the first group in FIG. 4, that is, data needs to be deleted, and the execute engine may determine index information corresponding to data that needs to be deleted. For a specific determining manner, refer to an embodiment in the conventional technology. This is not limited in this application.

In embodiments of this application, the parallel task includes the index information corresponding to the plurality of database operations, to indicate the storage engine to invoke the hardware accelerator to execute the plurality of database operations in parallel. The serial task includes index information corresponding to one or more serial database operations, and indicates the storage engine to invoke the hardware accelerator to execute the database operations in series.

In embodiments of this application, the index information may be a hash index or an adaptive radix tree (adaptive radix tree, ART) structure index. The hash index is characterized by read/write balancing and an expanded hash table structure, and is applicable to primary key query and point query. The ART index uses a radix tree structure and supports ordering and library of parameterized modules (Library of Parameterized Modules, LPM), is characterized by adaptive node scaling and cache friendliness, and is applicable to secondary indexing and range query.

For example, after determining the execution task, the execute engine may invoke the storage engine to execute a corresponding operation. For example, the optimistic transaction mode is used as an example. Still refer to FIG. 4. After determining the parallel tasks (for example, the index information) corresponding to the database operations (which may also be understood as transactions) in the first group, the execute engine may indicate the corresponding parallel tasks to the storage engine based on an index interface between the execute engine and the storage engine. The parallel tasks include but are not limited to the index information of the database operations in the first group, to indicate, to the storage engine, which transactions are processed in parallel as a group. The storage engine may invoke, based on the indication of the execute engine, the hardware accelerator to execute corresponding operations in parallel.

In a possible implementation, the grouping step may alternatively be performed by the query engine. The query engine may perform grouping based on the conflict detection result, and indicate the grouping result to the execute engine. The execute engine may invoke, based on the grouping result, the storage engine to execute a corresponding operation. In other words, the steps performed by each engine (or module) in this application may alternatively be performed by another engine (or module). An execution body is not limited in this application. Details are not described below again.

The storage engine may determine, based on the indication of the execute engine (namely, the execution task), a group corresponding to each piece of index information, which may alternatively be understood as determining database operations corresponding to which index information need to be processed in parallel together.

Still refer to FIG. 2. For example, the storage engine includes a transaction decoupling module. A delay operation queue is set in the transaction decoupling module, and a plurality of versions of information of the transaction may be placed in the delay queue, so that the plurality of versions of information of the transaction (which may also be understood as the database operation) are decoupled from indexes. In other words, compared with a manner in the conventional technology in which the plurality of versions of information of the transaction are recorded through the indexes, in embodiments of this application, the plurality of versions of information are recorded in the queue, so that the plurality of versions of information are decoupled from the indexes. In this way, when the storage engine invokes the hardware accelerator to execute the transaction based on the index information, the plurality of versions of information are not carried, to facilitate subsequent batch processing. In the conventional technology, the storage engine needs to mark index information of data corresponding to a delete operation, to mark data of the version as a to-be-deleted version. In actual processing, the storage engine needs to mark an index based on a status of an operation, and execute, based on the mark, an operation like deleting data indicated by the index. In this process, the storage engine needs to continuously search for a marker, and perform corresponding processing based on the marker. In embodiments of this application, the transaction decoupling module may set the version information in the queue by setting the delay operation queue, and does not need to mark delete. In an execution process, the storage engine may directly invoke, based on a status of an index in the queue, the hardware accelerator to execute a corresponding operation on data (which may be an original version or a copy) indicated by the index, to reduce a delete marking procedure, thereby simplifying an overall procedure and improving data processing efficiency. For example, the database receives a plurality of operations, and the plurality of operations include an operation of updating data A to data B and an operation of updating data B to data C. In this case, the data A, the data B, and the data C are a plurality of versions of a same piece of data, which may alternatively be understood as statuses of data at different time. For example, the data A, the data B, and the data C all correspond to respective indexes. In the delay queue maintained by the storage engine, data of a corresponding version may be found based on an index, and the hardware accelerator is invoked to execute a corresponding operation.

It should be noted that the delay operation queue in embodiments of this application complies with a first in first out principle.

In embodiments of this application, the delay queue may include a first queue and a second queue. The first queue may be referred to as a commit queue (commit queue), and the second queue may be an abort queue (abort queue). The commit queue is used to store information such as index information corresponding to a delete operation. The abort queue may be used to store information such as index information corresponding to a reverse operation of an insert operation.

In embodiments of this application, the delete operation is placed in the commit queue, so that the database can process all delete operations in the commit queue before committing the transaction, and the delete operation does not need to be marked in a manner of marking delete, thereby increasing a transaction processing speed of the delete operation. It may be understood as that, in embodiments of this application, processing of the delete operations is delayed. After completing grouping, the execute engine may indicate the storage engine to place the delete operations in the delay queue, and generate a parallel task before committing, to indicate the storage engine to invoke the hardware acceleration module to execute the delete operations in parallel. For the insert operation, a corresponding parallel task may be generated after grouping, to indicate the storage engine to invoke the hardware acceleration module to execute the parallel operation. In addition, the execute engine indicates the storage engine to place the reverse operation of the insert operation in the abort queue.

In embodiments of this application, the reverse operation of the insert operation is placed in the abort queue, so that in a transaction rollback process, the database can roll back the transaction based on the reverse operation in the abort queue. For example, the reverse operation of the insert operation is the delete operation. For example, if an insert operation A is to insert data A into specified address space, a reverse operation of the insert operation A is to delete the data A. It may be understood as that, in the transaction rollback process, all completed operations need to be recovered to statuses before the transaction is executed, and correspondingly, a result corresponding to an insert operation that is executed needs to be deleted.

In a possible implementation, to meet different transaction isolation requirements, the queue may further record time information corresponding to each database operation. Optionally, information such as the index information and the time information of the database may be correspondingly recorded in the queue. A recycling module (which may also be referred to as a clearing module or the like, and is not limited in this application) may be disposed in the CPU (which may be the execute engine or the storage engine). The recycling module may delete, based on the time information corresponding to each object (namely, each database operation) in the commit queue, an object that meets a condition. Optionally, the condition is a database operation whose time information is the earliest (or may be understood as a database operation whose time is the earliest). In other words, when the CPU detects that time information of any operation in the commit queue is the earliest, the CPU or the CPU may invoke the hardware accelerator (for a specific invoking manner, refer to the following embodiment) to execute the delete operation. After the execution is completed, information such as (including index information and time information) corresponding to the delete operation is deleted from the queue. It may be understood as that the data corresponding to the delete operation with the earliest time is no longer accessed by another operation, and therefore no operation conflict is caused.

In a possible implementation, the delay queue may alternatively be maintained by the execute engine. This is not limited in this application.

For example, the storage engine may invoke, based on the indication of the execute engine (namely, the execution task), the hardware accelerator to execute the corresponding database operation in parallel or in series.

Still refer to FIG. 2. For example, the hardware side includes but is not limited to the memory processor, the CPU, the hardware accelerator, the memory, and the like.

In embodiments of this application, the memory may include a shared memory, and storage space of the shared memory is less than or equal to a size of storage space of the memory. For example, the shared memory is preconfigured. In embodiments of this application, both the hardware accelerator and the memory processor may directly read information and data in the shared memory.

In embodiments of this application, the query engine, the execute engine, and the storage engine on the software side are all run on the CPU. Optionally, the CPU may be single-core or multi-core. This is not limited in this application.

In embodiments of this application, the hardware accelerator may include at least one type of accelerator. For example, a first hardware accelerator and a second hardware accelerator may be included. The first hardware accelerator may include a plurality of (for example, 32, which specifically depends on a hardware setting before delivery, and is not limited in this application) hardware acceleration units, and the second hardware accelerator may include a plurality of hardware acceleration units. Optionally, the first hardware accelerator may be a hash accelerator (Accelerator) (briefly referred to as HashAcc), and the second hardware accelerator may be an ART accelerator (briefly referred to as ARTAcc).

For example, the hash accelerator may be configured to process a hash index (for a concept, refer to the foregoing descriptions), and the ART accelerator may be configured to process an ART index (for a concept, refer to the foregoing descriptions). In other words, the storage engine may invoke different types of hardware accelerators to process corresponding types of indexes.

For example, the memory processor is optionally a programmable acceleration unit. In embodiments of this application, the memory processor may alternatively be understood as a coprocessor configured to perform scheduling. The memory processor may invoke the hardware accelerator based on an indication of the storage engine.

In embodiments of this application, the memory processor may provide different types of interfaces for the storage engine (namely, the CPU), to implement different invocation. For example, the memory processor may provide a first interface, a second interface, and a third interface. In an example, the storage engine may invoke the hardware accelerator through the first interface. For example, the storage engine may send an indication signal to the memory processor through the first interface, to indicate to start the hardware accelerator and indicate the quantity of hardware acceleration units in the started hardware accelerator. As described above, the hardware accelerator may include the plurality of hardware acceleration units, and the execute engine may group the database operations based on the quantity of hardware acceleration units. In an execution process, the storage engine may invoke the hardware acceleration units whose quantity is equal to the quantity of database operations in the group, so that the plurality of hardware acceleration units execute the plurality of database operations in the group in parallel. For example, the memory processor triggers, in response to the received indication information, the hardware accelerator to start a corresponding quantity of hardware acceleration units, which may also be understood as starting a corresponding quantity of threads, or may be understood as triggering the hardware accelerator to execute corresponding program logic, to execute the parallel task.

In another example, the memory processor may release the CPU through the second interface. After the memory processor indicates the hardware accelerator to execute the database operation, the memory processor may send an indication signal to the CPU through the second interface, to indicate that the hardware accelerator already starts to execute the corresponding operation. To avoid a waste of resources caused by CPU waiting, the memory processor sends the indication signal to the CPU through the second interface, to indicate to release the CPU. The CPU may execute another operation in response to the received indication information, to avoid long-time waiting, thereby improving hardware resource utilization. Optionally, after the hardware accelerator completes the parallel task, the memory processor may send an indication signal to the CPU, to indicate the CPU to read an execution result in the shared memory. Specific details are described below in detail.

In still another example, the storage engine may further read the data in the shared memory based on the third interface.

It may be understood as that both the first interface and the second interface are control channels, and are configured to transmit control signals. The third interface may be a data channel, and may be configured to transmit data.

For example, communication protocols supported by the interfaces may be the same or different. A format of information transmitted through the interface complies with the protocol of the interface.

In embodiments of this application, the first interface may be a spawn (spawn) interface, the second interface may be a suspend (suspend) interface, and the third interface may be an AccMsgQueque (acceleration information queue) interface.

For example, as described above, the execute engine may determine the corresponding parallel task based on the grouping result. The parallel task includes but is not limited to the index information and the like. The execute engine may indicate the parallel task to the storage engine. The storage engine may offload (that is, transmit) the index information corresponding to the parallel task to the hardware accelerator, to invoke the hardware accelerator to execute the corresponding database operations in parallel based on the index information.

It should be noted that, in embodiments of this application, the storage engine may input the index information corresponding to the parallel task to the shared memory, and the hardware accelerator may read the corresponding index information from the shared memory, and execute the corresponding operation, to implement data transmission between the storage engine and the hardware accelerator.

With reference to FIG. 2, the following describes the data processing method in embodiments of this application in detail by using specific embodiments. As described above, the database operation includes the DDL operation and the DML operation. Before the DML operation is executed, a database table needs to be created through the DDL operation. In this embodiment of this application, a form of the database table is merely used as an example for description. There may alternatively be another form in another embodiment. This is not limited in this application.

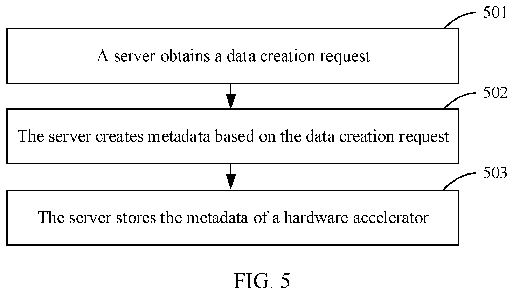

FIG. 5 is an example of a procedure of creating a database table. Refer to FIG. 5. The procedure specifically includes but is not limited to the following steps.

S501: The server obtains a data creation request.

For example, the user may enter a corresponding database statement in a human-computer interaction interface provided by the client of the database, to create metadata. The client sends the data creation request to the database in response to a received user command (namely, the database statement), to indicate the server to create the metadata. For example, the metadata is data that defines a data structure. For example, both a table header (namely, a column) of a database table and a name of the database table are metadata corresponding to the database table. Data in the database table is data content. The index information in embodiments of this application indicates a space address in which the data content is stored.

S502: The server creates the metadata based on the data creation request.

For example, after receiving the data creation request, the server parses the request to obtain information required for creating the metadata. The information may be referred to as schema (schema) information. The information includes but is not limited to a table, a column, a data type, a primary key, a foreign key, and the like.

The server may create the metadata based on the obtained schema information. For specific details, refer to embodiments in the conventional technology. This is not limited in this application.

S503: The server stores the metadata of the hardware accelerator.

For example, in this embodiment of this application, if the electronic device in which the database is located has the hardware structure in FIG. 2, that is, the hardware accelerator is disposed, and the hardware accelerator may support acceleration of the database operation, the server records related information of the hardware accelerator. The related information indicates a control in which the hardware accelerator is located and a hardware accelerator (for example, the first hardware accelerator or the second hardware accelerator) that is used to execute a subsequent acceleration operation on the metadata created in S302.

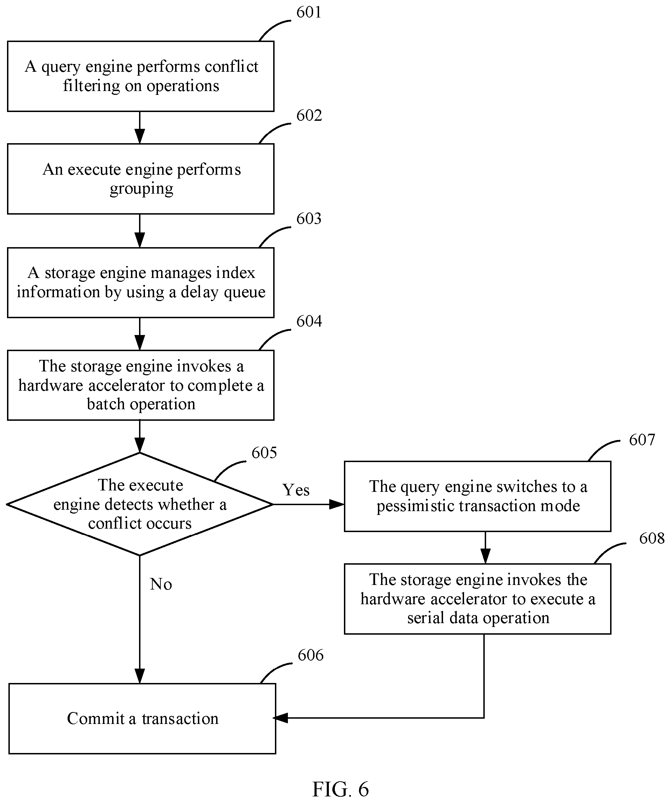

FIG. 6 is a schematic flowchart of an example of data processing. Refer to FIG. 6. The following steps are specifically included but are not limited thereto.

S601: The query engine performs conflict filtering on operations.

In this embodiment of this application, after the metadata (for example, the database table) is created, the user enters a database statement in the interface provided by the client, to execute a corresponding database operation, namely, the DML operation, on the database table, so as to execute the database operations such as insert, delete, update, and lookup on the database table.

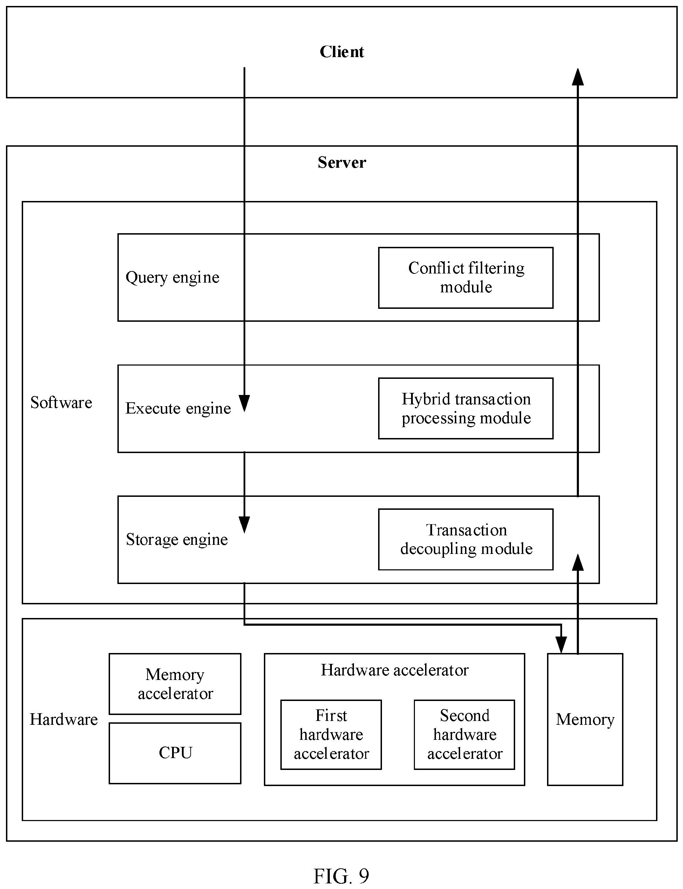

It should be noted that the procedure in FIG. 4 is the flowchart of processing corresponding to the insert, delete, and update operations. The lookup operation may alternatively be understood as an operation of reading the data content in the database table. For details, refer to related descriptions in FIG. 9.

The query engine performs conflict detection on all obtained database operations. For a specific conflict detection manner, refer to FIG. 3. Details are not described herein again. After obtaining a conflict detection result, the query engine may indicate the conflict detection result to the execute engine.

In this embodiment of this application, after the query engine is started, the transaction mode status machine is set to the optimistic transaction mode. Optionally, the query engine may indicate the current transaction mode, namely, the optimistic transaction mode, to the execute engine, so that the execute engine can determine the parallel task based on the optimistic transaction mode.

S602: The execute engine performs grouping.

For example, the execute engine determines, based on the status of the transaction mode status machine maintained by the query engine, that the current mode is the optimistic transaction mode. In this case, the execute engine may further perform grouping based on the conflict detection result indicated by the query engine.

In this embodiment of this application, the database operations obtained by the query engine may include two or more database operations that depend on each other. Certainly, all the database operations in the obtained database operations may be out of order (that is, the database operations do not depend on each other).

In this embodiment of this application, the database operations that depend on each other may be grouped into a same group. For the out-of-order database operations, the execute engine may group the database operations based on the conflict detection result, so that database operations included in a same group do not conflict with each other. For a specific grouping manner, refer to the related descriptions in the foregoing embodiments and FIG. 4. Details are not described herein again. In other words, in this embodiment of this application, the database performs conflict filtering on the database operation in advance, so that a conflict problem caused by the out-of-order operation can be effectively reduced.

Then, the execute engine may determine a parallel task based on a grouping result. For example, for the insert operation, the execute engine may generate related information such as index information. For example, for the delete operation, the execute engine may determine related information such as corresponding index information. For example, FIG. 4 is still used for description. The execute engine may determine, based on the grouping result, other information such as the corresponding index information for the delete database operations in the first group, and determine that the delete database operations in the first group are a parallel task. Correspondingly, the execute engine generates, based on the grouping result, related information such as the index information for the insert database operations in the second group. The execute engine may determine that the insert database operations in the second group are a parallel task.

It should be noted that, as described above, the delete operation is placed in the commit queue and is processed before the transaction is committed. The execute engine may alternatively determine, before the transaction is committed, the parallel task corresponding to the delete operation. This is not limited in this application.

In this embodiment of this application, conflict filtering is performed on the plurality of database operations in each parallel task (which may also be understood as a group) in advance, to filter out 99% (the value is an experimental value, and is not limited in this application) of conflicting operations. In this way, the parallel operation in the optimistic transaction mode can be normally executed, and the data processing efficiency is effectively improved.

In a possible implementation, the parallel task may not correspond to the grouping result. For example, the execute engine may group non-conflicting operations into one group based on the conflict detection result, and group conflicting operations into different groups. For example, the execute engine detects that an operation A, an operation B, and an operation C conflict with each other, and an operation D and an operation E conflict with each other. Correspondingly, the execute engine may place the operation A, the operation B, and the operation C in a group A, a group B, and a group C respectively. The operation D is placed in the group B, and the operation E is placed in the group C. In other words, the execute engine may not perform grouping based on the quantity of accelerators, but perform grouping only according to the grouping rule 1. In this example, when formulating a parallel plan, the execute engine may formulate the parallel plan according to the grouping rule 2 and the grouping rule 3 described above. For example, the execute engine may select 32 (that is, meeting the quantity of accelerators) database operations from the group A, where the 32 database operations meet the grouping rule 2 and the grouping rule 3, so that the database operations in the parallel plan do not conflict with each other, and execution costs of the database operations are similar and types of the database operations are the same. The execute engine may further select another 32 database operations from the other database operations in the group A, and formulate a parallel plan. Similarly, the execute engine may select 32 database operations from the group B, and formulate a parallel plan.

In this embodiment of this application, the parallel task of the database is constructed based on the conflict detection result, so that most problems that the operation conflict may occur can be filtered out. In other words, the operations that may cause the operation conflict are placed in different parallel tasks (namely, groups), so that the conflict in the process of executing the parallel task can be effectively avoided, and a probability of the conflict in a parallel execution process is reduced, to improve processing efficiency of the optimistic transaction mode. This may also be understood as optimization of the optimistic transaction mode to avoid frequent rollback of the transaction caused by the operation conflict.

S603: The storage engine manages the index information by using the delay queue.

For example, the execute engine may indicate at least one parallel task to the storage engine through the index interface between the execute engine and the storage engine. The storage engine may execute a corresponding operation based on the parallel task.

Specifically, the storage engine may obtain corresponding index information based on the parallel task. Database operations corresponding to the index information are operations that need to be processed in parallel.

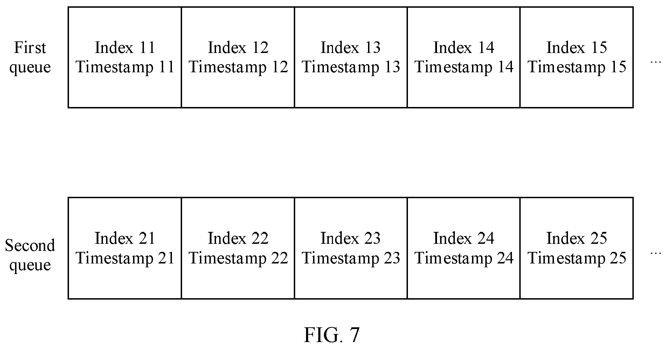

In this embodiment of this application, as described above, the storage engine may maintain the first queue and the second queue. FIG. 7 is a diagram of an example of queues. Refer to FIG. 7. As shown in FIG. 7, the first queue (namely, the commit queue) includes a plurality of pieces of index information, for example, includes an index 11 to an index 15, and time information corresponding to a database operation corresponding to each index, for example, includes a timestamp 11 to a timestamp 15. For example, the index 11 may be the index information corresponding to the delete operation in the first group in FIG. 4, and is used to point to the data (for example, data 11) that needs to be deleted. Still refer to FIG. 7. The second queue (namely, the abort queue) includes a plurality of pieces of index information, for example, includes an index 21 to an index 25, and time information corresponding to a database operation corresponding to each index, for example, includes a timestamp 21 to a timestamp 25. For example, the index 21 may be the index information corresponding to the reverse operation (for the concept, refer to the foregoing descriptions) of the insert operation in the second group in FIG. 4, and is used to point to the space address into which the data needs to be written in the insert operation, to delete the data content in the space address during the reverse operation.

In this embodiment of this application, as described above, when the operations (that is, the operations corresponding to the index information) in the commit queue meet an execution condition, the storage engine invokes the hardware accelerator to execute the corresponding operation. In this embodiment of this application, the execution condition of the commit queue is execution upon committing. In other words, the delete operation corresponding to each index in the commit queue is executed only before the delete operation is committed. It may also be understood as that before the transaction is ready to be committed, that is, when the corresponding data content needs to be deleted, the storage engine invokes the hardware accelerator to execute the corresponding delete operation. In other words, in this embodiment of this application, the database maintains the commit queue, to effectively avoid time consumption of steps such as marking and querying for delete, and effectively improve execution efficiency of the delete operation, to improve overall processing efficiency of the database. In addition, by maintaining the abort queue, the database may obtain the corresponding index information when the transaction is required to be rolled back, to perform rollback based on the index information. In this manner, the plurality of versions of information can be stored in the queue without being lost. In addition, the plurality of versions of information is stored in the queue, and the index information does not need to be additionally marked, so that the accelerator obtains only the index information, and the accelerator completes the parallel task more quickly and better.

In this embodiment of this application, as described above, each operation in the abort queue may be executed instantly, that is, may be executed without waiting for committing.

S604: The storage engine invokes the hardware accelerator to complete a batch operation.

For example, the storage engine may invoke, based on the indication of the execute engine and the parallel task, the hardware accelerator to execute the corresponding operation.

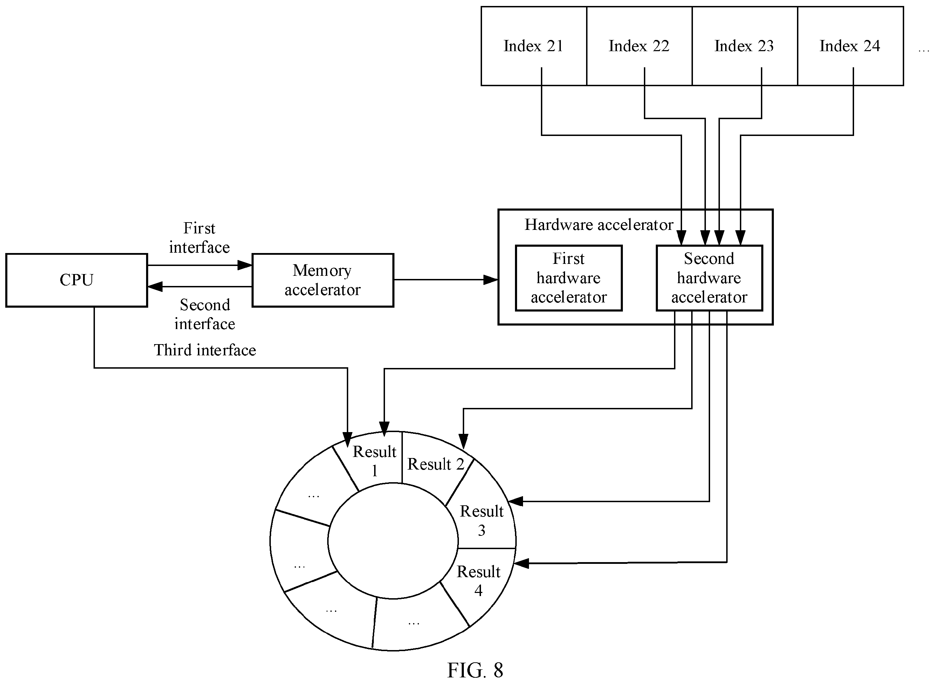

FIG. 8 is a diagram of an example of invoking the hardware accelerator. Refer to FIG. 8. For example, the CPU (namely, the storage engine) sends the indication signal to a memory accelerator through the first interface, to trigger the hardware accelerator and offload the task (namely, the index information) that needs to be executed to the hardware accelerator.

In response to the indication signal received from the first interface, the memory accelerator may determine that the hardware accelerator needs to be started, the type of the hardware accelerator that needs to be started, and the quantity of hardware acceleration units that need to be started. For example, the memory accelerator triggers the second hardware accelerator, and the quantity of started acceleration units in the second hardware accelerator is 32, which may also be understood as triggering 32 acceleration threads. Each thread (or acceleration unit) is configured to process one piece of index information.

As described above, the type of the hardware accelerator that needs to be started may be determined based on a type of the index information. For example, if the type of the index information is the ART index, the second hardware accelerator (namely, the ART accelerator) is invoked for execution. For another example, if the type of the index information is the hash index, the first hardware accelerator (namely, the hash accelerator) is invoked for execution.

In this example, the hardware accelerator that needs to be started is the second hardware accelerator, and the parallel task includes index information corresponding to 32 database operations (that is, the group includes 32 database operations, and the value is merely an example, and is not limited in this application).

For example, as described above, the storage engine may transmit the parallel task to the hardware accelerator. For example, the storage engine may write the parallel task into the shared memory through the third interface. The parallel task includes but is not limited to the index information corresponding to the 32 database operations that need to be executed in parallel this time and the corresponding operations (namely, the insert operations, which may also be understood as the data that needs to be written), to indicate the hardware accelerator to write the corresponding data into the space indicated by the 32 pieces of index information.

Optionally, the storage engine may input the information in the parallel task into the shared memory in a form of a queue. This is not limited in this application.

For example, that the second hardware accelerator starts the 32 hardware acceleration units in response to triggering of the memory processor may also be understood as starting the 32 acceleration threads, where each thread is used to process one database operation, to implement parallel processing of the 32 database operations.

For example, each of the 32 hardware acceleration units sequentially reads parallel tasks from the shared memory. For example, as shown in FIG. 8, a hardware acceleration unit 1 (not shown in the figure) reads an index 11 and operation information (for example, including an insert operation and corresponding data, which is not shown in the figure) from the shared memory, and a hardware acceleration unit 2 reads an index 12 and operation information from the shared memory, the hardware acceleration unit 3 reads an index 13 and operation information from the shared memory, and the hardware acceleration unit 4 reads an index 14 and operation information from the shared memory. Only the operations of the four indexes (namely, the four acceleration units) are shown in the figure. Actually, more operations may be included. Examples are not enumerated one by one in this application.

Still refer to FIG. 8. For example, the hardware acceleration units (for example, including the hardware acceleration unit 1 to the hardware acceleration unit 32) write, based on the obtained index information and the obtained operation information, the corresponding data into the space addresses indicated by the index information, to complete the insert operations.

For example, each time the hardware accelerator completes a database operation, an execution result is written into a ring queue of the shared memory. For example, the execution result includes a success or a failure.

For example, in the ring queue, each execution result may correspond to an execution ID, and the execution ID may be agreed on with the CPU. For example, when the CPU writes the parallel task into the shared memory, each piece of index information may further correspond to an execution ID, and the execution ID may be used to identify a database operation in the current parallel task.

For example, the hardware accelerator may write the execution result and the corresponding execution ID into the ring queue. It should be noted that a data format in the ring queue meets a requirement of the communication protocol of the third interface. In other words, both the CPU and the hardware accelerator may read the data in the ring queue or write data into the ring queue.

S605: The storage engine detects whether a conflict occurs.

For example, the storage engine (namely, the CPU or the execute engine, which is not limited in this application) reads the ring queue in the shared memory through the third interface. The storage engine may determine, based on the execution ID corresponding to each result, a database operation corresponding to each result.

For example, an execution ID corresponding to the index 11 corresponding to an insert operation 1 is an ID 1. After writing the data into the corresponding space based on the index 21, the hardware accelerator (for example, the hardware acceleration unit 1) writes a result 1 into the ring queue. The result 1 includes the ID 1 and success indication information, to indicate that an execution result of the database operation (namely, a database operation 1) corresponding to the ID 1 is a success, that is, the data is successfully written into the space to which the index corresponding to the database operation points.

For another example, an execution ID corresponding to the index 22 corresponding to an insert operation 2 is an ID 2. The hardware acceleration unit 2 writes the data into the corresponding space based on the index 22, and detects that the data fails to be written. The hardware acceleration unit 2 writes a result 2 into the ring queue. The result 2 includes the ID 2 and failure indication information, to indicate that an execution result of the database operation (namely, a database operation 2) corresponding to the ID 2 is a failure, that is, the data fails to be written into the space to which the index corresponding to the database operation points.

The storage engine may read the result in the ring queue through the third interface. In an example, if any read result is a failure, it is determined that the operation conflict occurs, and S607 is performed.

In another example, if the storage engine reads all results in the ring queue, and all the results are a success, S604 and S605 are repeatedly performed. In other words, a parallel task corresponding to another group continues to be executed until all insert operations are processed.

S606: Commit the transaction.

For example, as described above, the delete operation in the commit queue is executed before the transaction is committed. Before the transaction is committed, it may also be understood as that after all operations other than the delete operation in the transaction are processed, the storage engine extracts the corresponding index information from the commit queue based on the parallel task of the execute engine, and invokes the hardware accelerator to complete the delete operation in parallel. A specific implementation is the same as that of the insert operation. Details are not described herein again.

For example, after reading all the results in the ring queue, the storage engine deletes, from the commit queue, information of the database operations corresponding to all the results in the ring queue. For example, the parallel task includes index information 11 and operation information (for example, a delete operation) of a delete operation 1. The storage engine invokes the hardware accelerator to execute the delete operation, to delete data content in a space address to which the index information 11 points. After executing the corresponding delete operation, the hardware accelerator writes an execution result into the ring queue. The storage engine reads the result from the ring queue. For example, after reading results corresponding to all database operations of the current parallel task, the storage engine may delete related information from the delay queue. For example, the storage engine deletes, from the commit queue, information corresponding to the delete operation 1, for example, including the index information 11 and time information.

For example, after determining that all the database operations in the current transaction are completed, the storage engine commits the transaction, and feeds back an execution result of the transaction to the client. Optionally, the execution result of the transaction includes but is not limited to: successful execution or failed execution. That the transaction fails to be executed is sent after the database is switched to the pessimistic transaction mode, and the transaction still fails to be executed.

For example, the storage engine clears information in the abort queue.

S607: The query engine switches to the pessimistic transaction mode.

For example, the storage engine detects that the conflict occurs, and may report the conflict to the query engine. The query engine switches the transaction mode status machine from the optimistic transaction mode to the pessimistic transaction mode.

S608: The storage engine invokes the hardware accelerator to execute a serial data operation.

For example, if the execute engine detects that the status machine of the query engine is switched to the pessimistic transaction mode, the execute engine may generate a corresponding serial task based on the current mode. In other words, in the pessimistic transaction mode, the data operations are executed in series to prevent the operation conflict.

For example, after detecting switching to the pessimistic transaction mode, the execute engine indicates the storage engine to roll back the transaction. As described above, the delete operation in the commit queue is processed before the transaction is committed, which may be understood as that the operation conflict basically does not occur in the delete operation in the commit queue. If the abort queue stores the information (including but not limited to the index information and the like) corresponding to the reverse operation of the insert operation, the storage engine (namely, the CPU) or the storage engine invokes the hardware accelerator to execute the reverse operations corresponding to all the completed insert operations in the abort queue, to delete the inserted data, that is, the storage engine or the hardware accelerator may delete, based on the index information corresponding to the reverse operation, the data in the space to which the index information points.

It should be noted that the information in the commit queue and the abort queue is still stored.

For example, after the transaction is rolled back, the execute engine generates the serial task. The execute engine may invoke the hardware accelerator via the memory processor in the foregoing invoking manner. Different from the foregoing embodiments, in this example, only one hardware acceleration unit in the hardware accelerator needs to be invoked to complete the plurality of database operations in series. For a specific implementation of the pessimistic transaction mode, refer to descriptions in embodiments in the conventional technology. Details are not described herein again.

Similar to the foregoing embodiments, each time the hardware accelerator executes a database operation, an execution result may be written into the ring queue. The CPU (for example, the execute engine) may read a corresponding execution result. An implementation of the CPU (for example, the execute engine) is similar to that described above. Details are not described herein again.

For example, after all the database operations of the transaction are completed, the storage engine commits the current transaction.

In a possible implementation, in the pessimistic transaction mode, if the CPU is the multi-core processor, the storage engine may not invoke the hardware accelerator, but the CPU executes the serial task. This is not limited in this application.

In another possible implementation, the query engine may alternatively execute the operation like conflict detection. This is not limited in this application.

FIG. 9 is a schematic flowchart of an example of reading data. Refer to FIG. 9. The following is specifically included: A client may receive a database statement entered by a user, to read data in a database (for example, a database table). The client sends a query request to a server. An execute engine in the server receives the query request, and may parse the query request, to obtain corresponding index information and determine a corresponding database operation (namely, a lookup operation). The execute engine may generate a query task, and indicate the query task to a storage engine. The query task includes but is not limited to the index information and the lookup operation.

For example, the storage engine may read corresponding data content from a shared memory based on the query task, and feed back the read data content to the client.

It should be noted that FIG. 9 shows reading in a direction connection manner. In other words, the user may enter an instruction via the client, and the client locally interacts with the server. It may also be understood that interaction processes in FIG. 9 all belong to local interaction (or may be understood as local operations). In another possible implementation, the user may alternatively perform, via another terminal (for example, a computer or a tablet computer, which is not limited in this application), a communication connection to a device (for example, a server) to which the database belongs. The communication connection may be socket (socket) communication. Correspondingly, a client of the database is also deployed on the terminal. The user enters a query instruction on the client of the terminal, and the client performs network communication with the server of the database, to send the command to the server through a communication connection.

It should be further noted that the technical solutions of the present invention may be applied to a database processing process of a data communication platform, and may also be applied to another computing platform having data sharing and access, for example, a data storage platform, a graph computing platform, or a stream computing platform. The data storage platform is used as an example. The technical solution is used, so that fast data read/write can be completed, and further, fast writing and querying of the data storage platform can be completed. In addition, the efficient conflict verification mechanism can be used as a basic module of a general-purpose database or an embedded database to reduce transaction conflicts and improve a database throughput capability.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in an actual implementation.

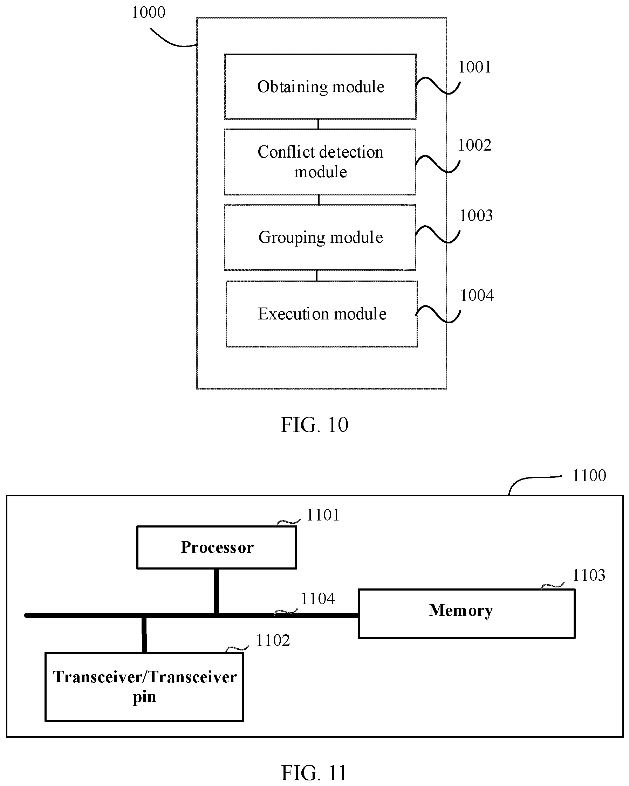

FIG. 10 is a diagram of an example of a structure of a data processing apparatus 1000. Refer to FIG. 10. The data processing apparatus 1000 includes but is not limited to an obtaining module 1001, a conflict detection module 1002, a grouping module 1003, and an execution module 1004. The obtaining module 1001 is configured to obtain a transaction, where the transaction includes N database operations, and N is a positive integer greater than 1. The conflict detection module 1002 is configured to perform conflict detection on the N database operations to obtain a conflict detection result, where the conflict detection result indicates that a first database operation and a second database operation are conflicting operations of each other, and the first database operation and the second database operation belong to the N database operations. The grouping module 1003 is configured to group the N database operations into M groups based on the conflict detection result, where each of the M groups includes a plurality of database operations, the first database operation and the second database operation belong to different groups, and M is a positive integer greater than 1. The execution module 1004 is configured to concurrently execute the plurality of database operations in each of the M groups.

In an example, FIG. 10 is a block diagram of an apparatus 1000 according to an embodiment of this application. The apparatus 1000 may include a processor 1001 and a transceiver/transceiver pin 1002, and optionally, further include a storage 1003. The processor 1001 may be configured to perform the steps performed by the database in the methods in the foregoing embodiments, control a receiving pin to receive a signal, and control a sending pin to send a signal.

Components of the apparatus 1000 are coupled together through a bus 1004, and in addition to a data bus, the bus system 1004 further includes a power bus, a control bus, and a status signal bus. However, for clear description, various types of buses in the figure are marked as the bus system 1004.

Optionally, the storage 1003 may be configured to store the instructions in the foregoing method embodiments.

All related content of the steps in the foregoing method embodiments may be cited in function descriptions of corresponding functional modules. Details are not described herein.

Based on a same technical concept, an embodiment of this application further provides a computer-readable storage medium. The computer-readable storage medium stores a computer program, the computer program includes at least one segment of code, and the at least one segment of code may be executed by a computer, to control the computer to implement the foregoing method embodiments.

Based on a same technical concept, an embodiment of this application further provides a computer program. When the computer program is executed by a computer, the computer program is configured to implement the foregoing method embodiments.

A part or all of the program may be stored in a storage medium encapsulated with a processor, or a part or all of the program may be stored in a storage that is not encapsulated with a processor.

Based on a same technical concept, an embodiment of this application further provides a processor. The processor is configured to implement the foregoing method embodiments. The processor may be a chip.

Methods or algorithm steps described with reference to content disclosed in embodiments of this application may be implemented by hardware, or may be implemented by a processor executing software instructions. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A data processing method, comprising:
obtaining a transaction, wherein the transaction comprises N database operations, and N is a positive integer greater than 1;
performing conflict detection on the N database operations to obtain a conflict detection result, wherein the conflict detection result indicates that a first database operation and a second database operation are conflicting operations of each other, and the first database operation and the second database operation belong to the N database operations;
grouping the N database operations into M groups based on the conflict detection result, wherein each of the M groups comprises a plurality of database operations, the first database operation and the second database operation belong to different groups, and M is a positive integer greater than 1; and
concurrently executing the plurality of database operations in each of the M groups.

2. The method according to claim 1, wherein the concurrently executing the plurality of database operations in each of the M groups comprises:
invoking a plurality of hardware accelerators to concurrently execute a plurality of database operations in a single group of the M groups, wherein a single hardware accelerator executes a single database operation.

3. The method according to claim 2, wherein the invoking a plurality of hardware accelerators to concurrently execute a plurality of database operations in a single group of the M groups comprises:
triggering X hardware accelerators based on X database operations comprised in a first group, wherein the first group belongs to the M groups; and
indicating the X database operations to the X hardware accelerators, so that the X hardware accelerators execute the X database operations in parallel.

4. The method according to claim 3, wherein the invoking a plurality of hardware accelerators to concurrently execute a plurality of database operations in a single group of the M groups comprises:
reading execution results of the X database operations from a shared memory, wherein the execution results of the X database operations are written after the plurality of hardware accelerators concurrently execute the X database operations.

5. The method according to claim 4, wherein the invoking a plurality of hardware accelerators to concurrently execute a plurality of database operations in a single group of the M groups comprises:
after the execution results of the X database operations are read from the shared memory, triggering Y hardware accelerators based on Y database operations comprised in a second group, wherein the second group belongs to the M groups; and
indicating the Y database operations to the Y hardware accelerators, so that the Y hardware accelerators execute the Y database operations in parallel.

6. The method according to claim 4, wherein the execution results of the X database operations are placed in a ring queue of the shared memory.

7. The method according to claim 3, wherein the invoking a plurality of hardware accelerators to concurrently execute a plurality of database operations in a single group of the M groups comprises:
sending a first indication signal to a memory processor through a first interface, wherein the indication signal indicates the memory processor to trigger the X hardware accelerators.

8. The method according to any one of claims 1 to 7, wherein before the concurrently executing the plurality of database operations in each of the M groups, the method comprises:
placing index information of a delete operation in the N database operations in a first queue; and
placing index information of a reverse operation of an insert operation in the N database operations in a second queue.

9. The method according to claim 8, wherein the concurrently executing the plurality of database operations in each of the M groups comprises:
before the transaction is committed, executing delete operations in the first queue in parallel based on the M groups.

10. The method according to claim 8, wherein the method further comprises:
if an operation conflict is detected in a process of concurrently executing the plurality of database operations in each of the M groups, executing the reverse operation of the insert operation based on the index information of the reverse operation of the insert operation in the second queue, to complete rollback of the transaction.

11. The method according to claim 10, wherein the method further comprises:
after the transaction is rolled back, executing the N database operations in series.

12. The method according to claim 1, wherein the performing conflict detection on the N database operations to obtain a conflict detection result comprises:
obtaining a hash code corresponding to each of the N database operations;
detecting whether hash codes corresponding to the N data operations have equal values; and
when it is detected that a hash code of the first database operation is equal to a hash code of the second database operation, determining that the first database operation and the second database operation are the conflicting operations of each other.

13. The method according to claim 12, wherein the grouping the N database operations into M groups based on the conflict detection result comprises:
grouping the N database operations into the M groups based on the conflict detection result and according to a preset grouping rule, wherein
the preset grouping rule comprises at least one of the following:
hash codes of a plurality of database operations in a single group are not equal;
a quantity of database operations comprised in a single group is less than or equal to a quantity of hardware accelerators;
execution time of database operations comprised in a single group is within a specified range; and
types of database operations comprised in a single group are the same.

14. A data processing apparatus, comprising:
an obtaining module, configured to obtain a transaction, wherein the transaction comprises N database operations, and N is a positive integer greater than 1;
a conflict detection module, configured to perform conflict detection on the N database operations to obtain a conflict detection result, wherein the conflict detection result indicates that a first database operation and a second database operation are conflicting operations of each other, and the first database operation and the second database operation belong to the N database operations;
a grouping module, configured to group the N database operations into M groups based on the conflict detection result, wherein each of the M groups comprises a plurality of database operations, the first database operation and the second database operation belong to different groups, and M is a positive integer greater than 1; and
an execution module, configured to concurrently execute the plurality of database operations in each of the M groups.

15. The apparatus according to claim 14, wherein the execution module is specifically configured to:
invoke a plurality of hardware accelerators to concurrently execute a plurality of database operations in a single group of the M groups, wherein a single hardware accelerator executes a single database operation.

16. The apparatus according to claim 15, wherein the execution module is specifically configured to:
trigger X hardware accelerators based on X database operations comprised in a first group, wherein the first group belongs to the M groups; and
indicate the X database operations to the X hardware accelerators, so that the X hardware accelerators execute the X database operations in parallel.

17. The apparatus according to claim 16, wherein the execution module is specifically configured to:
read execution results of the X database operations from a shared memory, wherein the execution results of the X database operations are written after the plurality of hardware accelerators concurrently execute the X database operations.

18. The apparatus according to claim 17, wherein the execution module is specifically configured to:
after the execution results of the X database operations are read from the shared memory, trigger Y hardware accelerators based on Y database operations comprised in a second group, wherein the second group belongs to the M groups; and
indicate the Y database operations to the Y hardware accelerators, so that the Y hardware accelerators execute the Y database operations in parallel.

19. The apparatus according to claim 18, wherein the execution results of the X database operations are placed in a ring queue of the shared memory.

20. The apparatus according to claim 16, wherein the execution module is specifically configured to:
send a first indication signal to a memory processor through a first interface, wherein the indication signal indicates the memory processor to trigger the X hardware accelerators.

21. The apparatus according to any one of claims 14 to 20, wherein the execution module is further configured to:
place index information of a delete operation in the N database operations in a first queue; and
place index information of a reverse operation of an insert operation in the N database operations in a second queue.

22. The apparatus according to claim 21, wherein the execution module is further configured to:
before the transaction is committed, execute delete operations in the first queue in parallel based on the M groups.

23. The apparatus according to claim 21, wherein the execution module is further configured to:
if an operation conflict is detected in a process of concurrently executing the plurality of database operations in each of the M groups, execute the reverse operation of the insert operation based on the index information of the reverse operation of the insert operation in the second queue, to complete rollback of the transaction.

24. The apparatus according to claim 23, wherein the execution module is further configured to:
after the transaction is rolled back, execute the N database operations in series.

25. The apparatus according to claim 14, wherein the conflict detection module is specifically configured to:
obtain a hash code corresponding to each of the N database operations;
detect whether hash codes corresponding to the N data operations have equal values; and
when it is detected that a hash code of the first database operation is equal to a hash code of the second database operation, determine that the first database operation and the second database operation are the conflicting operations of each other.

26. The apparatus according to claim 25, wherein the grouping module is specifically configured to:
group the N database operations into the M groups based on the conflict detection result and according to a preset grouping rule, wherein
the preset grouping rule comprises at least one of the following:
hash codes of a plurality of database operations in a single group are not equal;
a quantity of database operations comprised in a single group is less than or equal to a quantity of hardware accelerators;
execution time of database operations comprised in a single group is within a specified range; and
types of database operations comprised in a single group are the same.

27. An electronic device, comprising:
one or more processors;
a storage; and
one or more computer programs, wherein the one or more computer programs are stored in the storage, and when the computer program is executed by the one or more processors, the electronic device is enabled to perform the method according to any one of claims 1 to 13.

28. A computer storage medium, comprising computer instructions, wherein when the computer instructions are run on an electronic device, the electronic device is enabled to perform the method according to any one of claims 1 to 13.

29. A computer program product, wherein when the computer program product is run on a computer, the computer is enabled to perform the method according to any one of claims 1 to 13.
